# EUROPEAN PATENT SPECIFICATION

(11) **EP 3 203 753 B1**
(45) Date of publication and mention of the grant of the patent: **27.05.2020**
(21) Application number: 15847087.2
(22) Date of filing: 01.10.2015
(51) Int. Cl.: H04N 21/431, H04N 21/436, H04N 21/482

(54) **CONTENT RECEPTION SYSTEM, CONTENT RECEPTION DEVICE, DISPLAY DEVICE, CONTENT RECEPTION SYSTEM CONTROL METHOD, AND PROGRAM**
INHALTSEMPFANGSSYSTEM, INHALTSEMPFANGSVORRICHTUNG, ANZEIGEVORRICHTUNG, INHALTSEMPFANGSSYSTEMSTEUERUNGSVERFAHREN UND PROGRAMM
SYSTÈME DE RÉCEPTION DE CONTENU, DISPOSITIF DE RÉCEPTION DE CONTENU, DISPOSITIF D'AFFICHAGE, PROCÉDÉ DE COMMANDE D'UN SYSTÈME DE RÉCEPTION DE CONTENU, ET PROGRAMME

(30) Priority: 03.10.2014 JP 2014205251; 18.02.2015 JP 2015030058
(43) Date of publication of application: 09.08.2017
(73) Proprietor: Panasonic Intellectual Property Management Co., Ltd., Osaka-shi, Osaka 540-6207 (JP)
(72) Inventor: GOBARA, Kunio, Osaka-shi, Osaka 540-6207 (JP)
(74) Representative: Vigand, Philippe
(86) International application number: PCT/JP2015/004994
(87) International publication number: WO 2016/051802

(56) References cited:
- WO-A1-2007/105876
- WO-A2-2008/012488
- JP-A- 2005 066 126
- JP-A- 2010 187 246
- JP-A- 2012 231 538
- US-A1- 2006 051 055
- US-A1- 2008 209 491
- US-A1- 2012 284 765
- US-A1- 2013 191 927
- US-A1- 2014 282 750

## Description

### TECHNICAL FIELD

The present disclosure relates to a content receiving system, a content receiving device, a display device, and a control method of the content receiving system.

### BACKGROUND ART

The Unexamined Japanese Patent Publication JP-A-2009-152927 discloses a technique regarding a content receiving device that receives or acquires a video content item (hereinafter, simply referred to as a "content item") from a broadcast wave, a storage medium or the like.

The document STUN - Simple Traversal of User Datagram Protocol (UDP) Through Network Address Translators (NATs), RFC 3489, March 2003 discloses a technique for making communication beyond NAT (Network Address Translation).

It is desired that, when a user browses the acquired content item, the content receiving device display information such as characters indicating a title and the like of the content item so that the user can easily understand the information.

In the content receiving device, thumbnails are sometimes used when a plurality of the content items are displayed as a list. Each of the thumbnails is a reduced display of a still image or a moving image, which indicates details of the content item.

In some case, the content receiving device uses a server that retains the thumbnails of the content items, which are acquired by the content receiving device, in order to display the plurality of content items as a list by using the thumbnails. The server may be used from a plurality of the content receiving devices. Moreover, the received content items individually held by the plurality of content receiving devices may differ from one another. In such a case, the server must hold all of the thumbnails of the content items individually held by the plurality of content receiving devices, and for this purpose, it is necessary for the server to include a storage device having a relatively large storage capacity. Moreover, in order to transmit and receive the thumbnails to and from the content receiving device, it is necessary for the server to be connected to a communication line having a relatively large channel capacity.

WO2088/012488 A1 discloses a content sharing system, for implementation in a requesting peer, to receive at least a part of a chunk from a serving peer, the chunk being part of a content item, the requesting peer being operationally connected to a plurality of peers including the serving peer via a communications network, the content item being media content originally broadcast in a media stream by a Headend to at least some of the peers, the system including a metadata module to receive chunk metadata identifying the location of the chunk based on an identifier in the media stream originally broadcast by the Headend, a content transfer module to request the at least part of the chunk from the serving peer based on the chunk metadata, and receive the at least part of the chunk from the serving peer.

US 2006/051055 A1 discloses, in a content remote watching system, a PVR (Personal Video Recorder) located at home, a server, and a mobile phone. A user can access a website on the server, and request the reproduction of the content recorded on the PVR. The PVR transmits data for streaming-reproducing the content, to the mobile phone, in accordance with an instruction from the server. In the mobile phone, the data is reproduced and is watched by the user.

JP 2005 066126 A discloses a cradle that records a program of television broadcast instructed by a mobile phone. The recorded program is converted into thumbnail image data and text data on the basis of metadata generated by a metadata generating server. The thumbnail image data and the text data are cross-referenced with each other by means of time information. The cradle supplies all the data above to the mobile phone that displays the thumbnail image and the text corresponding to the thumbnail image on a display section.

WO 2007/105876 A1 discloses a method for browsing a video based on thumbnail images.

### SUMMARY

The present disclosure provides a content receiving system capable of suppressing an increase in a storage capacity of a storage device provided in a server, and moreover, capable of suppressing an increase in a channel capacity of a communication line to which the server is connected.

A content receiving system in the present disclosure is defined in claim 1. A control method of a content receiving system is defined in Claim 6.

The content receiving system in the present disclosure is effective for suppressing the increase in the storage capacity of the storage device provided in the server, and moreover, capable of suppressing the increase in the channel capacity of the communication line to which the server is connected.

### BRIEF DESCRIPTION OF DRAWINGS

FIG. 1 is a diagram schematically showing an example of a system configuration of a content receiving system in a first exemplary embodiment.
FIG. 2 is a block diagram schematically showing an example of a configuration of a content receiving device in the first exemplary embodiment.
FIG. 3 is a block diagram schematically showing an example of a configuration of a list controller of the content receiving device in the first exemplary embodiment.
FIG. 4 is a block diagram schematically showing an example of a configuration of a thumbnail controller of the content receiving device in the first exemplary embodiment.
FIG. 5 is a block diagram schematically showing an example of a configuration of a content controller of the content receiving device in the first exemplary embodiment.
FIG. 6 is a block diagram schematically showing an example of a configuration of a display device in the first exemplary embodiment.
FIG. 7 is a block diagram schematically showing an example of a configuration of a list controller of the display device in the first exemplary embodiment.
FIG. 8 is a block diagram schematically showing an example of a configuration of a thumbnail controller of the display device in the first exemplary embodiment.
FIG. 9 is a block diagram schematically showing an example of a configuration of a content controller of the display device in the first exemplary embodiment.
FIG. 10 is a sequence chart schematically showing an example of processing executed in the content receiving system in the first exemplary embodiment.
FIG. 11 is a diagram showing an example of an image displayed on the display device in the first exemplary embodiment.
FIG. 12 is a diagram schematically showing an example of a system configuration of a content receiving system in a second exemplary embodiment.
FIG. 13 is a flowchart showing an example of processing in a case of acquiring information regarding a content item in a display device in the second exemplary embodiment.
FIG. 14 is a diagram schematically showing an example of a system configuration of a content receiving system in a modification example of the exemplary embodiments.

### DESCRIPTION OF EMBODIMENTS

Hereinafter, exemplary embodiments will be described in detail with reference to the drawings as appropriate. However, a description more in detail than necessary is omitted in some case. For example, a detailed description of a well-known item and a duplicate description of substantially the same configuration are omitted in some case. These omissions are made in order to avoid unnecessary redundancy of the following description and to facilitate the understanding of those skilled in the art.

Note that the accompanying drawings and the following description are provided in order to allow those skilled in the art to fully understand the present disclosure, and it is not intended to thereby limit the subject described in the scope of claims.

Moreover, the respective drawings are schematic diagrams, and are not necessarily exactly illustrated. Furthermore, in the respective drawings, the same reference numerals are assigned to the same constituent elements.

Note that, in the following description, a content item refers to a video content item including a plurality of image frames. The content item may include audio, or does not have to include the audio.

### FIRST EXEMPLARY EMBODIMENT

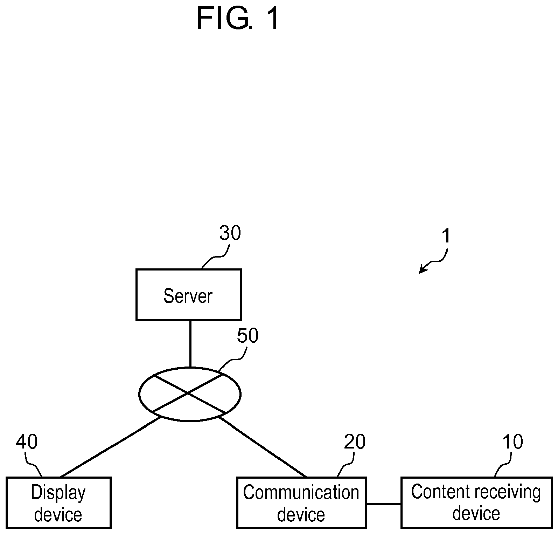

A description is made below of the first exemplary embodiment with reference to FIG. 1 to FIG. 11.

### [1-1. Configuration]

FIG. 1 is a diagram schematically showing an example of a system configuration of content receiving system 1 in the first exemplary embodiment.

As shown in FIG. 1, content receiving system 1 includes: content receiving device 10; communication device 20; server 30; and display device 40. Content receiving device 10 is connected to network 50 through communication device 20, and server 30 and display device 40 are connected to network 50.

Communication device 20 is a communication device for connecting a home LAN (Local Area Network) and a global network to each other. Content receiving device 10 is an example of a terminal connected to the home LAN, and network 50 is an example of the global network. Communication device 20 has a NAT (Network Address Translation) function that is an address translation function for communicably connecting, the terminal connected to the home LAN and a terminal connected to the global network, with each other.

In general, in the home LAN, a private IP (Internet Protocol) address (hereinafter, also simply referred to as a "private address") is used, and in the global network, a global IP address (hereinafter, also simply referred to as a "global address") is used. A device which has the private address (for example, content receiving device 10), and a device which has the global address (for example, server 30 or display device 40), have addressing-architectures different from each other, and accordingly, cannot directly communicate with each other by using the addresses held by the respective devices. Accordingly, communication device 20 translates the private address and the global address into each other, whereby a device connected to the home LAN and the device having the global address become communicable with each other.

Note that, in the case of performing such address translation as described above, communication device 20 does not change contents included in a payload portion of a communication packet.

For example, communication device 20 is a router (so-called broadband router) installed in a user's home, and is disposed on a boundary between the home LAN and the global network (or an access network for connecting to the global network).

Content receiving device 10 is a receiving device that receives content items from a broadcast wave or other content transmission sources. Content receiving device 10 transmits list information indicating a list of the content items held by content receiving device 10, and thumbnails of the held content items through network 50 to display device 40. Then, in response to a request (content acquisition request) from display device 40, content receiving device 10 transmits the held content items to display device 40. Content receiving device 10 communicates with respective devices, which are connected to network 50, by using the NAT function of communication device 20. For example, content receiving device 10 is a recording device, a television receiver or the like, which is installed in the user's home.

Note that, for example, the other content transmission sources include a content distribution site on the Internet. Specifically, content receiving device 10 may acquire content items from the content distribution site.

Server 30 is a server device for relaying information exchanged between content receiving device 10 and display device 40. Server 30 retains the list of the received content items held by content receiving device 10. Note that server 30 may include a relay (not shown) that relays information. Server 30 is substantially the same as a server computer that is used generally, and accordingly, a detailed description thereof is omitted. Note that, for server 30, a general computer having a network connection function may be used.

Display device 40 is a display terminal that displays the list of a plurality of the content items, which are held by content receiving device 10, and the thumbnails of these content items, and is thereby capable of presenting the list of the content items held by content receiving device 10. For example, display device 40 is a communication terminal such as a high-performance cellular phone terminal (smart phone), a cellular phone terminal, and a PC (Personal Computer).

Network 50 is a communication line to which communication device 20 (content receiving device 10 connected to communication device 20), server 30 and display device 40 are individually connected. A communication standard of network 50 may be arbitrary, and for example, may be configured by including a cellular phone communication network, a public communication network, a local area communication network, a home communication network, and the like, or may be configured in such a manner that a plurality of the above-described communication networks are combined with one another.

First, a description is made of content receiving device 10.

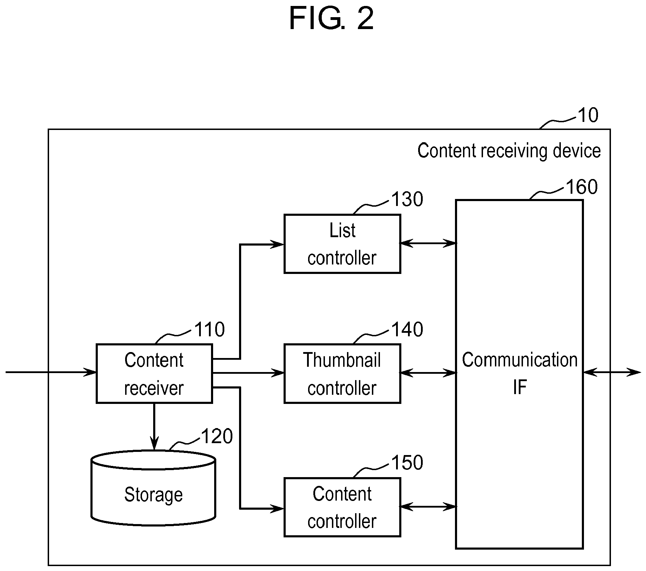

FIG. 2 is a block diagram schematically showing an example of a configuration of content receiving device 10 in the first exemplary embodiment.

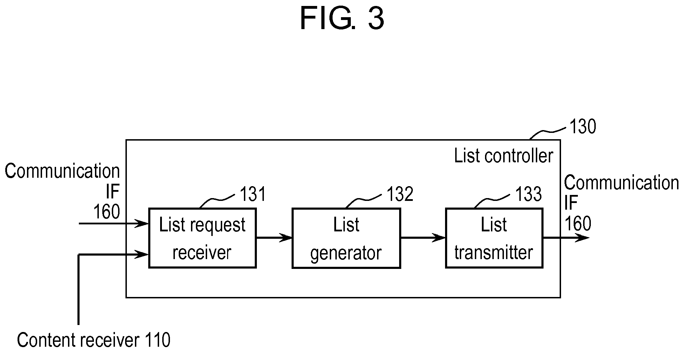

FIG. 3 is a block diagram schematically showing an example of a configuration of list controller 130 of content receiving device 10 in the first exemplary embodiment.

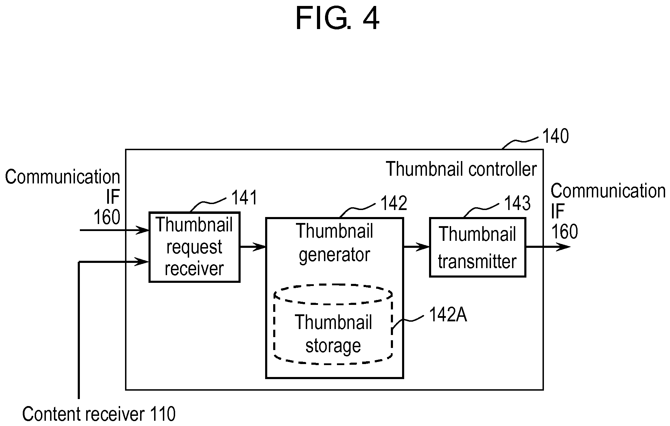

FIG. 4 is a block diagram schematically showing an example of a configuration of thumbnail controller 140 of content receiving device 10 in the first exemplary embodiment.

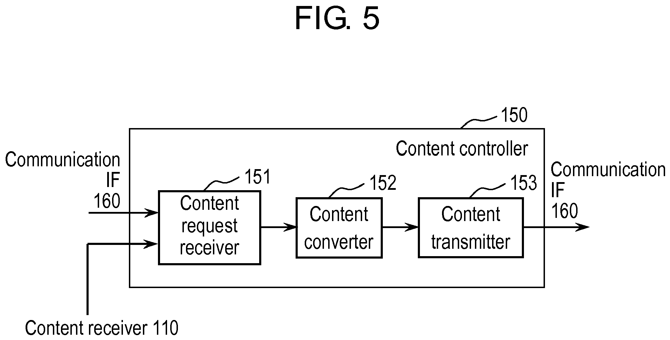

FIG. 5 is a block diagram schematically showing an example of a configuration of content controller 150 of content receiving device 10 in the first exemplary embodiment.

As shown in FIG. 2, content receiving device 10 includes: content receiver 110; storage 120; list controller 130; thumbnail controller 140; content controller 150; and communication IF (Interface) 160.

Content receiver 110 is configured to be capable of receiving (or also referred to as "acquiring") content items from a broadcast wave broadcast by a broadcast station, or from other content transmission sources. Such a content transmission source may be arbitrary as long as the content transmission source has a function to present the content items. For example, the content transmission source may be a broadcast station that broadcasts the content items by a broadcast wave, or content receiver 110 may be configured to receive the broadcast wave by using a tuner (not shown), and to acquire the content items included in the received broadcast wave.

Moreover, content receiver 110 may be configured to acquire the content items from a recording medium in which the content items are stored. The content items stored in the recording medium may be content items acquired (recorded) by content receiver 110 from the broadcast wave or the like in the past, or may be content items acquired by other devices.

Moreover, for example, content receiver 110 may be configured to acquire the content items through the Internet from a content distribution site on the Internet.

Note that content receiver 110 is an example of a first receiver.

Storage 120 is a storage device that stores the content items. For example, storage 120 is a large capacity storage device such as an HDD (Hard Disk Drive); however, storage 120 may be a video recording (audio recording) device capable of detachably attaching thereto a semiconductor storage element or a recording medium such as an optical disc and a magnetic disc, and the like. Storage 120 stores the content items as electronic data encoded in an appropriate format. The content items acquired in content receiver 110 are stored in storage 120. The content items stored in storage 120 may be content items acquired (recorded) by content receiver 110 from the broadcast wave or the like in the past, or may be content items acquired by other devices.

Note that content receiving device 10 may include a connector (not shown) for connecting the storage medium thereto in place of storage 120. In that case, the storage medium, which is connected to the connector and stores the content items, may be used as storage 120.

List controller 130 transmits a list of the content items, which is acquired by content receiver 110, to display device 40 through communication IF 160. A description is made below of list controller 130 with reference to FIG. 3.

List controller 130 includes: list request receiver 131; list generator 132; and list transmitter 133.

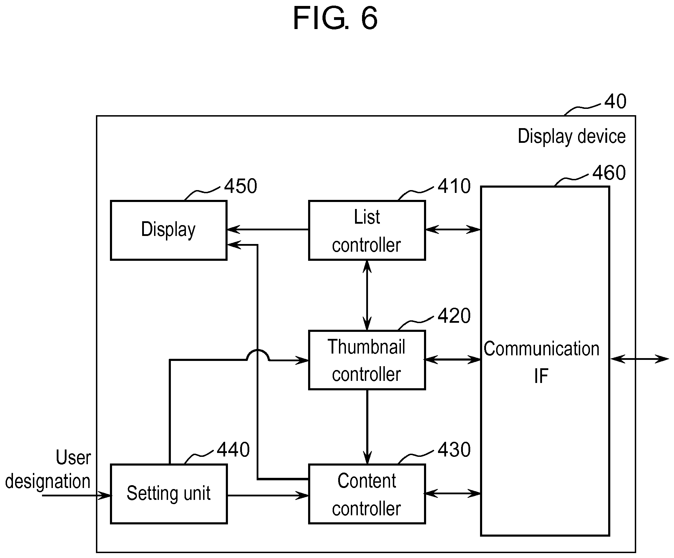

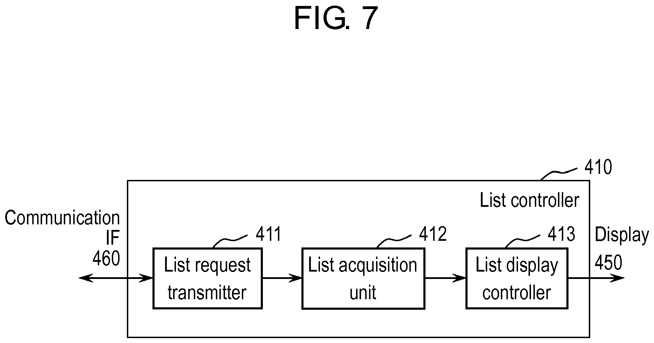

List request receiver 131 receives an acquisition request for the list of the content items through communication IF 160. This acquisition request is a request transmitted from list request transmitter 411 (refer to FIG. 6, FIG. 7) of display device 40 to content receiving device 10 in order that display device 40 can acquire the list of the content items held by content receiving device 10.

List generator 132 generates a list including pieces of identification information (hereinafter, also referred to as "content IDs"), which identify the respective content items acquired by content receiver 110. The content IDs may be arbitrary as long as being information capable of uniquely identifying the content items. For example, each of the content IDs may be information including a broadcast station name, a recording starting date/time, and a recording ending date/time. In place of the broadcast station name, a channel number of a channel that is a frequency band in the broadcast wave, the channel number being associated with the broadcast station, may be used. Alternatively, there may be used information including a network ID, a TS (transport stream) ID and a service ID in digital broadcast. Moreover, the content ID may include an event ID. Moreover, the content ID may include an identifier which is uniquely generated and given to the content item in order that content receiving device 10 (content receiver 110) can identify the content item at the time of recording the content item.

When list request receiver 131 receives the acquisition request for the list of content items from display device 40, list generator 132 may generate the above-described list corresponding to the acquisition request. Alternatively, list generator 132 may generate the above-described list at other timing. For example, list generator 132 may generate the above-described list when content receiver 110 acquires a new content item. In that case, list generator 132 may generate a list (hereinafter, also referred to as a "difference list") including only the content item newly acquired by content receiver 110. Moreover, list generator 132 may generate the list at other arbitrary timing.

List transmitter 133 transmits the list of the content items being generated by list generator 132, to display device 40 through communication IF 160. At this time, list transmitter 133 transmits the list to server 30 so that the list can reach display device 40 from server 30 by using a relay function by server 30.

In a case where list generator 132 generates the difference list, list transmitter 133 transmits the generated difference list to display device 40 through server 30. In this case, display device 40, which has received the difference list, updates the already held list by adding the difference list to this held list, and can thereby obtain a latest list.

Thumbnail controller 140 transmits the respective thumbnails of the content items, which are acquired by content receiver 110, to display device 40 through communication IF 160. A description is made below of thumbnail controller 140 with reference to FIG. 4.

Thumbnail controller 140 includes: thumbnail request receiver 141; thumbnail generator 142; and thumbnail transmitter 143.

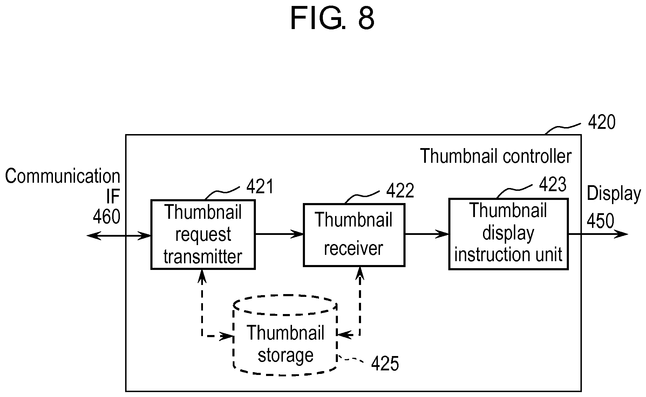

Thumbnail request receiver 141 receives an acquisition request for the thumbnail being transmitted from thumbnail request transmitter 421 (refer to FIG. 6 and FIG. 8) of display device 40, through communication IF 160. The thumbnail refers to a still image or a moving image, which corresponds to each of the content items and displays the details of the content items in a reduced display. One thumbnail is stored in one electronic file. A format of the electronic file may be a still image format (jpg, bmp or the like) or a moving image format (mpg, avi or the like). An electronic file with such a moving image format can store a thumbnail with a larger amount of information.

Note that the acquisition request for a thumbnail may include a user designation as to whether the acquisition request is a request for the still image thumbnail or a request for the moving image thumbnail.

Note that the acquisition request for the thumbnail may include identification information for identifying the content item, the broadcast station or the like. In this case, thumbnail request receiver 141 may notify content receiver 110 of the identification information, and the thumbnail of the content item identified by the identification information may be generated in thumbnail generator 142.

Thumbnail generator 142 generates the thumbnail of the content item acquired by content receiver 110. In a case where the user designation of the moving image or the still image is included in the acquisition request for the thumbnail, thumbnail generator 142 generates the moving image thumbnail or the still image thumbnail based on the user designation.

Note that, in a case where the identification information is included in the acquisition request for the thumbnail, thumbnail generator 142 may generate the thumbnail of the content item identified by the identification information.

Note that, for example, thumbnail generator 142 may extract a part of a plurality of image frames included in the content item, and may generate the thumbnail in a moving image file format by using the extracted image frame.

Note that thumbnail generator 142 may generate the thumbnail when thumbnail request receiver 141 receives the acquisition request for the thumbnail, or may generate the thumbnail at other timing. For example, when content receiver 110 receives a new content item, thumbnail generator 142 may generate a thumbnail of this newly acquired content item.

Note that, in a case of receiving a notification on timing of generating the thumbnail from content receiver 110, thumbnail generator 142 may generate the thumbnail at the timing that is based on the notification.

Note that thumbnail generator 142 may include thumbnail storage 142A that stores the thumbnail generated by thumbnail generator 142. Moreover, a part of storage 120 may be used as thumbnail storage 142A. In a case where thumbnail generator 142 includes thumbnail storage 142A, thumbnail generator 142 may determine whether or not the thumbnail to be generated is already stored in thumbnail storage 142A in a case of generating the thumbnail, and may generate the thumbnail only in a case where it is determined that the thumbnail is not stored therein. Then, in a case where the thumbnail to be generated is stored in thumbnail storage 142A, thumbnail generator 142 may read out and use the stored thumbnail.

Note that the thumbnail generator 142 may generate a thumbnail conforming to a standard for copy protection of the content item. The standard includes, for example, DTCP (Digital Transmission Content Protection) and DTCP+.

Thumbnail transmitter 143 transmits the thumbnail generated by thumbnail generator 142, to display device 40 through communication IF 160.

Content controller 150 transmits the content item, which is acquired by content receiver 110, to display device 40 through communication IF 160. A description is made below of content controller 150 with reference to FIG. 5.

Content controller 150 includes: content request receiver 151; content converter 152; and content transmitter 153.

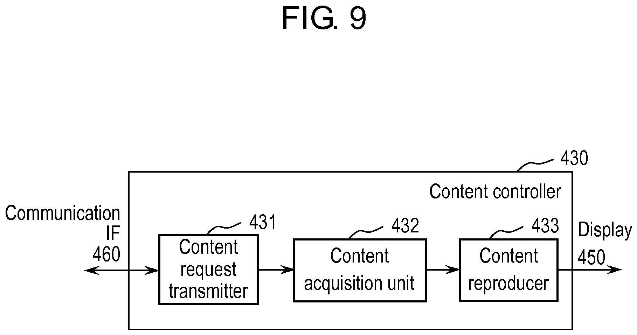

Content request receiver 151 receives the acquisition request for the content item from content request transmitter 431 (refer to FIG. 6 and FIG. 9) of display device 40 through communication IF 160. The acquisition request for the content item includes a content ID that identifies a content item as a target of the acquisition request. Moreover, the acquisition request for the content item may further include image quality information. The image quality information refers to information indicating quality of an image displayable by display device 40, and may be expressed by a numeric value (for example, "1", "2" or the like), or by a character string (for example, "high quality", "low quality" or the like), or by a data rate (for example, "1.5 Mbps", "400 kbps" or the like), or the like.

Content converter 152 encodes the content item, which is acquired by content receiver 110, in response to the acquisition request for the content item being received by content request receiver 151. In a case where the image quality information is included in the acquisition request for the content item, content converter 152 encodes the content item so that the content item can conform to the image quality information.

Content transmitter 153 transmits the content item, which is encoded by content converter 152, to display device 40 through communication IF 160.

Communication IF 160 is a communication interface for making communication with network 50 through communication device 20. Moreover, communication IF 160 can establish a connection (hereinafter, also referred to as a "P2P connection") for making P2P (Peer to Peer) communication with communication IF 460 (refer to FIG. 6) of display device 40, and can make P2P communication with display device 40. That is, communication IF 160 can make the communication between display device 40 and each of list controller 130, thumbnail controller 140 and content controller 150, by the P2P communication. Note that unlike server-client-type communication, the P2P communication refers to communication which terminals make directly with each other without passing through a server or the like. The P2P communication is communication made with a communication partner present beyond communication device 20 (NAT), and accordingly, may be referred to as NAT traversal communication.

Note that communication IF 160 may make the communication between display device 40 and each of thumbnail controller 140 and content controller 150, by communication that passes through server 30. Note that, the communication that passes through server 30 is generally referred to as server relay communication.

Communication IF 160 is a communication interface of a type suitable for the communication with network 50. The communication interface of such a type includes, for example, a wired LAN conforming to IEEE 802.3, a wireless LAN conforming to IEEE 802.11, and the like.

Next, a description is made of display device 40.

FIG. 6 is a block diagram schematically showing an example of a configuration of display device 40 in the first exemplary embodiment.

FIG. 7 is a block diagram schematically showing an example of a configuration of list controller 410 of display device 40 in the first exemplary embodiment.

FIG. 8 is a block diagram schematically showing an example of a configuration of thumbnail controller 420 of display device 40 in the first exemplary embodiment.

FIG. 9 is a block diagram schematically showing an example of a configuration of content controller 430 of display device 40 in the first exemplary embodiment.

As shown in FIG. 6, display device 40 includes: list controller 410; thumbnail controller 420; content controller 430; setting unit 440; display 450; and communication IF 460.

List controller 410 acquires the list of the content items, which are held by content receiving device 10, from content receiving device 10 or server 30, and controls display 450 so that the acquired list can be displayed in an appropriate expression format on display 450. A description is made below of list controller 410 with reference to FIG. 7.

List controller 410 includes: list request transmitter 411; list acquisition unit 412; and list display controller 413.

List request transmitter 411 transmits an acquisition request for requesting the list of the content items held by content receiving device 10. The acquisition request may be transmitted from list request transmitter 411 to server 30, or may be transmitted from list request transmitter 411 to list request receiver 131 (refer to FIG. 3) of content receiving device 10. In a case where the acquisition request for the list of the content items is transmitted from list request transmitter 411 to server 30, server 30 may transmit the list of the content items held by content receiving device 10, the list being held by server 30, to display device 40 in response to the acquisition request, or may transfer (transmit) the acquisition request to content receiving device 10. In a case where the acquisition request is transferred from server 30 to content receiving device 10, server 30 receives information, which is transmitted from content receiving device 10 in response to the acquisition request, and then transfers the received information to display device 40.

As described above, in the case where the acquisition request for the list of the content items is transmitted from list request transmitter 411 to server 30, display device 40 only needs to communicate with server 30, and does not have to communicate with content receiving device 10. Therefore, display device 40 can relatively shorten a time from the transmission of the acquisition request until the acquisition of the list of the content items, which corresponds to the acquisition request.

List acquisition unit 412 acquires the list of the content items held by content receiving device 10, the list being transmitted from content receiving device 10 or server 30 to display device 40, in response to the acquisition request for the list of the content items being transmitted from list request transmitter 411. List acquisition unit 412 is an example of a second receiver.

List display controller 413 controls display 450 so that an image showing the list of the content items held by content receiving device 10, the list being acquired by list acquisition unit 412, can be displayed on display 450 as appropriate.

Thumbnail controller 420 receives the thumbnails of the content items, which are held by content receiving device 10, from content receiving device 10 through communication IF 460, and controls list controller 410 so that the received thumbnails can be displayed on display 450 as appropriate. A description is made below of thumbnail controller 420 with reference to FIG. 8.

Thumbnail controller 420 includes: thumbnail request transmitter 421; thumbnail receiver 422; and thumbnail display instruction unit 423.

Thumbnail request transmitter 421 makes a request for the thumbnails of the content items, which are held by content receiving device 10, to content receiving device 10. That is, in order to acquire each of the thumbnails of the content items corresponding to the content IDs included in the list acquired by list controller 410, thumbnail request transmitter 421 transmits the acquisition request for the thumbnail to thumbnail request receiver 141 (refer to FIG. 4) of content receiving device 10 through communication IF 460.

Note that the timing when thumbnail request transmitter 421 transmits the acquisition request for the thumbnail may be arbitrary. For example, after list display controller 413 displays the image showing the list of the content items on display 450, thumbnail request transmitter 421 may transmit the acquisition request for the thumbnail. Moreover, in order to inform thumbnail request transmitter 421 of this transmission timing from list display controller 413, for example, list display controller 413 may transmit a control signal for requesting thumbnail request transmitter 421 to acquire the thumbnail to thumbnail request transmitter 421. In this case, after receiving the control signal, thumbnail request transmitter 421 transmits the acquisition request for the thumbnail to content receiving device 10.

Note that thumbnail request transmitter 421 may determine whether or not the thumbnail as a target of the acquisition request is presented from a source (for example, a broadcast station or the like) of the content item corresponding to the thumbnail. Then, in a case of determining that the thumbnail is presented from the source of the content item, thumbnail request transmitter 421 may transmit the acquisition request for the thumbnail to the source of the content item, and may acquire the thumbnail from the source. Moreover, in a case of determining that the thumbnail is not presented from the source of the content item, thumbnail request transmitter 421 may transmit the acquisition request for the thumbnail to content receiving device 10.

Moreover, thumbnail request transmitter 421 may periodically update a currently-displayed thumbnail as the image showing the list of the content items on display 450. Specifically, with regard to the thumbnail currently displayed on display 450, thumbnail request transmitter 421 newly transmits the acquisition request for the thumbnail, and may thereby receive a new thumbnail, and may update the thumbnail, which is currently displayed on display 450, to the received thumbnail. Moreover, thumbnail request transmitter 421 may repeat the transmission of the acquisition request for a new thumbnail periodically (for example, every few seconds).

Note that, in a case of accepting the user designation that designates the moving image or the still image for the thumbnail, thumbnail request transmitter 421 may include this user designation in the acquisition request for the thumbnail.

Thumbnail receiver 422 receives the thumbnail transmitted from content receiving device 10 in response to the acquisition request for the thumbnail being transmitted from thumbnail request transmitter 421. Thumbnail receiver 422 is an example of a second receiver.

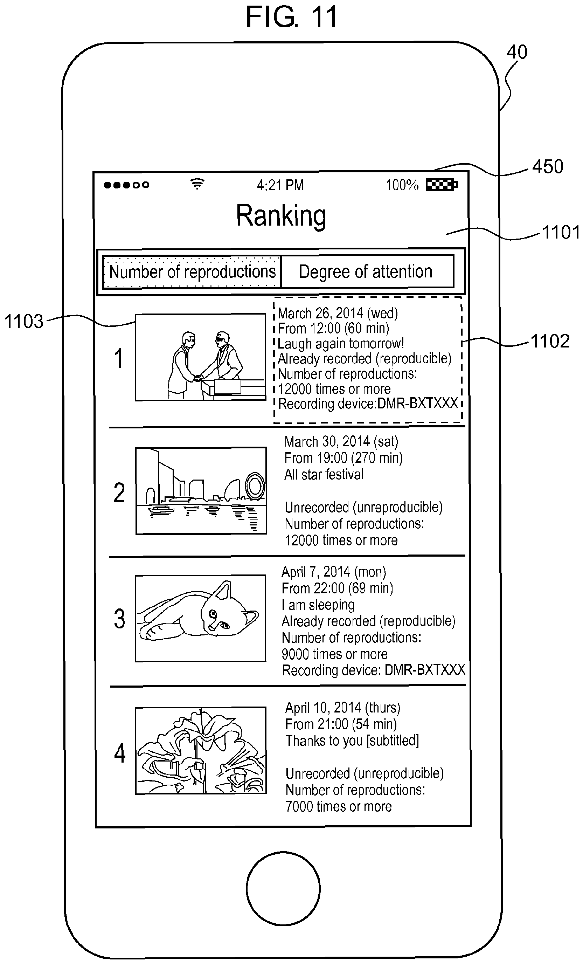

For list controller 410, thumbnail display instruction unit 423 performs control regarding the display of the thumbnail received by thumbnail receiver 422. Specifically, thumbnail display instruction unit 423 instructs list controller 410 to include the thumbnail, which is received by thumbnail receiver 422, in the image which list display controller 413 displays on display 450 by controlling display 450. An example of the image displayed on display 450 by this instruction is described later with reference to FIG. 11.

Note that, as shown by broken lines in FIG. 8, thumbnail controller 420 may include thumbnail storage 425. Thumbnail storage 425 is a storage device that temporarily retains the thumbnail received by thumbnail receiver 422. For example, thumbnail storage 425 is a semiconductor storage element; however, thumbnail storage 425 may be an HDD or the like. In a case where thumbnail controller 420 includes thumbnail storage 425, thumbnail receiver 422 can store the received thumbnail in thumbnail storage 425. In this way, before transmitting the acquisition request for the thumbnail, thumbnail request transmitter 421 can refer to the thumbnail retained in thumbnail storage 425, and can confirm whether or not the thumbnail as the target of the acquisition request is retained in thumbnail storage 425.

In a case where the thumbnail as the target of the acquisition request is retained in thumbnail storage 425, thumbnail request transmitter 421 does not transmit the acquisition request for the thumbnail, but may instruct thumbnail receiver 422 to acquire the thumbnail from thumbnail storage 425. Moreover, only in a case where the thumbnail as the target of the acquisition request is not retained in thumbnail storage 425, thumbnail request transmitter 421 may transmit the acquisition request for the thumbnail. Moreover, even if the thumbnail as the target of the acquisition request is retained in thumbnail storage 425, if the thumbnail is a thumbnail retained before a time designated in advance (that is, an old thumbnail), thumbnail request transmitter 421 may operate in a similar way to the case where the thumbnail as the target of the acquisition request is not retained in thumbnail storage 425 in order to acquire a new thumbnail.

Thumbnail controller 420 is configured as described above, whereby a frequency at which the thumbnail is transmitted and received decreases, and accordingly, traffic between display device 40 and content receiving device 10 can be reduced.

Content controller 430 receives each of the content items, which are held by content receiving device 10, from content receiving device 10 through communication IF 460, and controls display 450 so that the received content item can be displayed on display 450. A description is made below of content controller 430 with reference to FIG. 9.

Content controller 430 includes: content request transmitter 431; content acquisition unit 432; and content reproducer 433.

Content request transmitter 431 transmits the acquisition request for the content item, which is held by content receiving device 10, to content receiving device 10. Content request transmitter 431 accepts a user designation regarding the content item included in the list displayed on display 450 by list controller 410. Then, content request transmitter 431 transmits an acquisition request for the content item, which is designated by the user, to content request receiver 151 (refer to FIG. 5) of content receiving device 10 through communication IF 460. In this case, for example, after the control regarding the display of the thumbnail is performed for list controller 410 from thumbnail display instruction unit 423, a control signal for issuing a notification on timing of transmitting the acquisition request for the content item may be transmitted from thumbnail display instruction unit 423 to content request transmitter 431.

Note that content request transmitter 431 may transmit the acquisition request for the content item, the acquisition request including the above-mentioned image quality information.

Through communication IF 460, content acquisition unit 432 receives the content item transmitted from content receiving device 10 in response to the acquisition request for the content item being transmitted from content request transmitter 431.

Content reproducer 433 reproduces the content item received by content acquisition unit 432, and controls display 450 so that the reproduced still image or moving image can be displayed on display 450 as appropriate. The content item received by content acquisition unit 432 is encoded, and accordingly, content reproducer 433 decodes and reproduces the content item.

Setting unit 440 performs setting regarding operations for thumbnail controller 420 or content controller 430. Specifically, setting unit 440 performs setting, which includes the designation of the moving image or the still image for the thumbnail, for thumbnail controller 420. Moreover, setting unit 440 performs setting, which includes a designation of the content item and a designation of the image quality information, for content controller 430. For example, setting unit 440 accepts the user designation regarding these setting and designation, and sets information, which is based on the accepted user designation, on thumbnail controller 420 or content controller 430, and thereby reflects the accepted user designation to the operations of display device 40.

Display 450 is a display panel that displays an image. Display 450 displays the image, which includes the list of the content items, based on the control from list display controller 413 (refer to FIG. 7) of list controller 410. Moreover, display 450 displays the image of the content item, which is reproduced by content reproducer 433, based on the control from content reproducer 433 (refer to FIG. 9) of content controller 430.

Communication IF 460 is a communication interface for making communication with network 50. Communication IF 460 makes the NAT traversal communication with communication IF 160. Communication IF 460 is a communication interface of a type suitable for the communication with network 50. As the communication interface of such a type, for example, there are a wired LAN conforming to IEEE 802.3, a wireless LAN conforming to IEEE 802.11, and the like.

Communication IF 460 can make the communication, which is made between content receiving device 10 and each of list controller 410, thumbnail controller 420 and content controller 430, by the P2P communication. Communication IF 460 may make the communication, which is made between content receiving device 10 and each of thumbnail controller 420 and content controller 430, by communication that passes through server 30.

A description is made below of operations of content receiving system 1 configured as described above.

### [1-2. Operations]

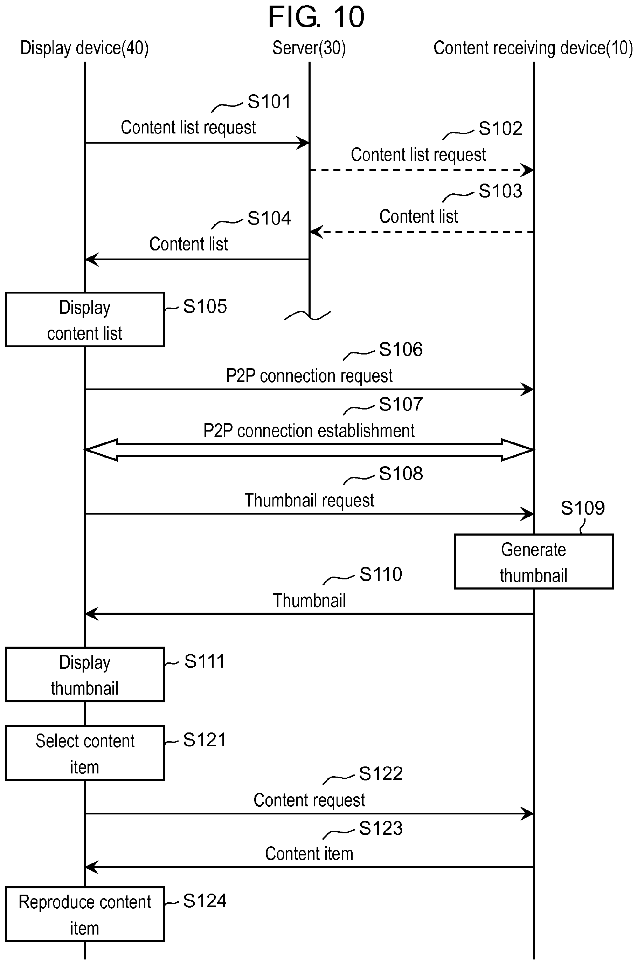

FIG. 10 is a sequence chart schematically showing an example of processing executed in content receiving system 1 in the first exemplary embodiment.

In the sequence chart shown in FIG. 10, there is shown a processing flow in which, in content receiving system 1, display device 40 acquires the list of the content items held by content receiving device 10, and thereafter, each of the content items included in the list is reproduced on display device 40.

List request transmitter 411 (refer to FIG. 7) of display device 40 transmits the acquisition request for the list of the content items to server 30 (Step S101).

Upon receiving the acquisition request for the list of the content items being transmitted from display device 40 in Step S101, server 30 transfers (transmits) the received acquisition request to content receiving device 10 (Step S102).

Upon receiving the acquisition request for the list of the content items being transferred from server 30 in Step S102, content receiving device 10 transmits the list of the content items, which are held by content receiving device 10, to server 30 based on the received acquisition request (Step S103).

Upon receiving the list of the content items transmitted from content receiving device 10 in Step S103, server 30 transmits the received list of the content items to display device 40 (Step S104).

Note that server 30 may transmit the list (list of the content items) held by server 30, to display device 40 in response to the acquisition request for the list of the content items being received by server 30 in Step S101 (Step S104). In this case, Step S102 and Step S103 are not executed.

Upon receiving the list of the content items transmitted from server 30 in Step S104, list display controller 413 (refer to FIG. 7) of display device 40 displays the image, which shows the received list of the content items, on display 450 (Step S105).

Communication IF 460 (refer to FIG. 6) of display device 40 makes a request for the P2P (Peer to Peer) connection to content receiving device 10 (Step S106).

Based on the request for the P2P connection in Step S106, the P2P connection is established between display device 40 and content receiving device 10 (Step S107).

Thumbnail request transmitter 421 (refer to FIG. 8) of display device 40 transmits the acquisition request for the thumbnail to content receiving device 10 (Step S108). This acquisition request is made by the P2P communication in which the connection is established in Step S107.

Thumbnail generator 142 (refer to FIG. 4) of content receiving device 10 generates the thumbnails of the content items held by content receiving device 10 (Step S109).

Thumbnail transmitter 143 (refer to FIG. 4) of content receiving device 10 transmits the thumbnails generated in Step S109, to display device 40 based on the acquisition request for the thumbnail being received in Step S108 (Step S110).

List display controller 413 (refer to FIG. 7) of display device 40 displays the thumbnails acquired in Step S109, on display 450 (Step S111). At this time, display device 40 displays the thumbnails, which correspond to the content items, on spots indicating the content items in the list of the content items being displayed in Step S105.

Setting unit 440 (refer to FIG. 6) of display device 40 accepts a selection operation for the content item by the user (Step S121).

For example, if display 450 includes a touch panel, the user touches one of the thumbnails displayed on display 450, and can thereby select a content item corresponding to the thumbnail. Alternatively, the user's selection operation may be performed in such a manner that the user moves a cursor by operating a user interface (not shown; for example, a key, a button, a touch pad, a pointing device, or the like) provided on display device 40, puts the cursor on one of the thumbnails displayed on display 450, and so on.

Content request transmitter 431 (refer to FIG. 9) of display device 40 transmits the acquisition request for the content item (content item designated by the user), which is selected by the user in Step S121, to content receiving device 10 (Step S122).

Content request receiver 151 (refer to FIG. 5) of content receiving device 10 receives the acquisition request for the content item being transmitted from display device 40 in Step S122, and content transmitter 153 (refer to FIG. 5) of content receiving device 10 transmits the content item, which corresponds to the acquisition request for the content item, to display device 40 (Step S123).

Content acquisition unit 432 (refer to FIG. 9) of display device 40 receives and acquires the content item, which is transmitted from content receiving device 10 in Step S123, and content reproducer 433 (refer to FIG. 9) of display device 40 reproduces the content item and displays the content item on display 450 (Step S124).

By a series of the above-described processing, in content receiving system 1, display device 40 can acquire the list of the content items held by content receiving device 10, and can display the acquired list on display 450. Then, display device 40 can acquire the content item, which is designated by the user from among the content items included in the list, from content receiving device 10, can reproduce the acquired content item, and can display the content item on display 450.

That is, the user can view the content item, which is designated by the user based on the thumbnail displayed on display 450 of display device 40 from among the plurality of content items held by content receiving device 10, on display 450 of display device 40.

Next, a description is made of the list of the content items displayed on display 450 of display device 40.

FIG. 11 is a diagram showing an example of image 1101 displayed on display device 40 in the first exemplary embodiment. Image 1101 is a list of the content items, which includes the thumbnails.

As shown in FIG. 11, for the respective content items, image 1101 includes: portions 1102 showing titles and the like of the content items; and portions 1103 showing the thumbnails of the content items.

On each of portions 1102, the title of the content item is displayed, and further, information such as a broadcast time and number of diagrams of the content item and a device used for recording may be displayed by characters (text).

On each of portions 1103, the thumbnail of the content item is displayed. Moreover, portions 1103 are displayed next to portions 1102. This is to visually indicate that portions 1103 are the thumbnails of the content items shown by portions 1102. Note that portions 1103 do not always have to be displayed next to portions 1102. However, it is desired that portions 1102 and portions 1103 be displayed in a display mode which is easy for the user to recognize that portions 1102 and portions 1103 are associated with each other (for example, portions 1102 and portions 1103 are connected to each other by lines, a color of the characters or background of each of portions 1102 and a color of a frame of each of portions 1103 are set to the same or similar color, and so on).

As described above, in the first exemplary embodiment, on display 450 of display device 40, the images of the thumbnails are displayed in addition to the display of the titles and the like of the content items by the characters for each of the content items. Hence, the user who is to select and view, on display device 40, the content item stored in content receiving device 10 can confirm the content item as a selection target visually and more easily.

### [1-3. Effects]

As described above, the content receiving system in this exemplary embodiment includes: the content receiving device; the server; and the display device. The content receiving device includes: the first receiver that receives a content item; the list transmitter; the thumbnail generator; and the thumbnail transmitter. The list transmitter transmits the list, which includes the information indicating the content item received by the first receiver, to the display device through the server. The thumbnail generator generates a thumbnail of the content item received by the first receiver. The thumbnail transmitter transmits the thumbnail generated by the thumbnail generator, to the display device. The display device includes: the second receiver; and the display. The second receiver receives the list transmitted by the list transmitter, and the thumbnail transmitted by the thumbnail transmitter. The display displays an image in which a thumbnail of a content item among a plurality of the thumbnails received by the second receiver is associated with the information included in the list received by the second receiver, the thumbnail of the content item corresponding to the information.

In this content receiving system, after generating the thumbnail of the acquired content item, the content receiving device directly transmits the generated thumbnail to the display device without passing through the server.

In a case where it is assumed that the server holds such thumbnails, and the thumbnails are supplied from the server to the display device, the server must include a storage device provided with a storage capacity necessary for retaining the thumbnails. Moreover, a communication line is required, which is provided with a channel capacity that enables the thumbnails to be transmitted from the content receiving device to the server, and enables the thumbnails to be transmitted from the server to the display device. Then, as the number of such content receiving devices connected to the server is increased, the storage capacity of the storage device, which is necessary for retaining the thumbnails, is increased, and moreover, the channel capacity of the communication line, which is necessary for transmitting and receiving the thumbnails, is increased.

In the content receiving system of which example is illustrated in this exemplary embodiment, the server does not have to retain the thumbnails in the series of processing in which the display device acquires the thumbnails from the content receiving device. Hence, the server does not have to include a storage device with a large storage capacity for retaining the thumbnails. Moreover, for the communication line that connects the server thereto, a communication line with a large channel capacity necessary for transmitting and receiving the thumbnails does not have to be used. Hence, in the content receiving system shown in this exemplary embodiment, the increase in the storage capacity of the storage device provided in the server can be suppressed, and moreover, the increase in the channel capacity of the communication line that connects the server thereto can be suppressed.

### SECOND EXEMPLARY EMBODIMENT

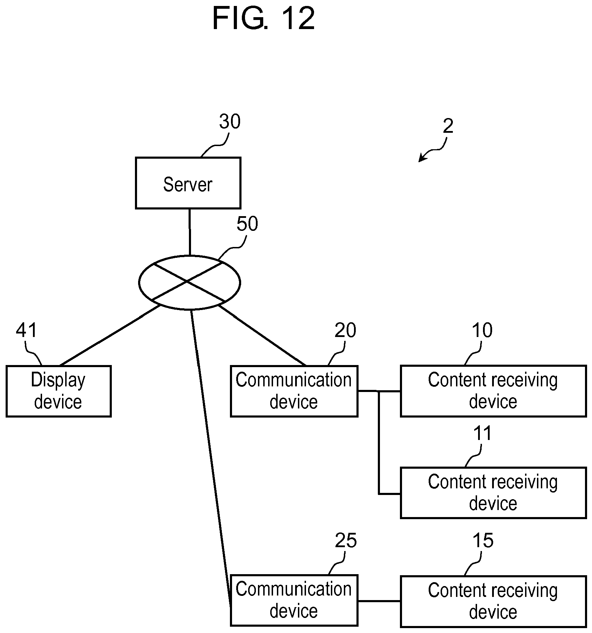

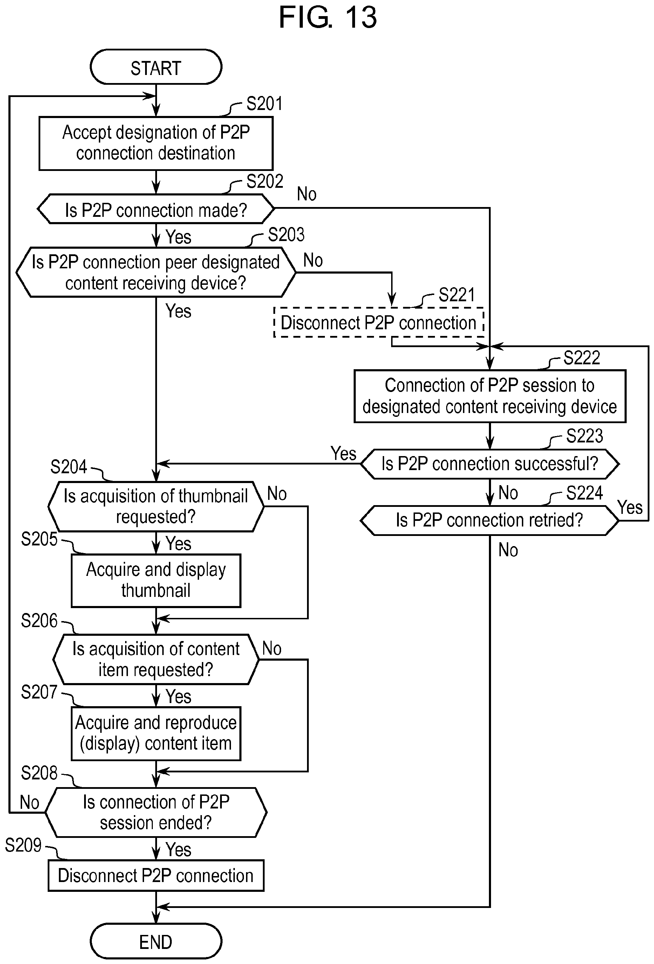

A description is made below of the second exemplary embodiment with reference to FIG. 12 and FIG. 13.

In the second exemplary embodiment, a description is made of a configuration in which the content receiving system includes a plurality of the content receiving devices.

Note that, in the following, the same reference numerals are assigned to substantially the same constituent elements or functional blocks as the constituent elements or the functional blocks in the first exemplary embodiment, and a detailed description thereof is omitted.

### [2-1. Configuration]

FIG. 12 is a diagram schematically showing an example of a system configuration of content receiving system 2 in the second exemplary embodiment.

As shown in FIG. 12, content receiving system 2 includes: the plurality of content receiving devices (content receiving device 10, content receiving device 11, and content receiving device 15); a plurality of communication devices (communication device 20 and communication device 25); server 30; and display device 41.

Note that the number of the content receiving devices provided in content receiving system 2 is not limited to three, and the number of communication devices provided in content receiving system 2 is not limited to two.

Server 30 shown in FIG. 12 is substantially the same as server 30 shown in the first exemplary embodiment, content receiving devices 10, 11, 15 shown in FIG. 12 are substantially the same as content receiving device 10 shown in the first exemplary embodiment, and communication devices 20 and 25 shown in FIG. 12 are substantially the same as communication device 20 shown in the first exemplary embodiment, and accordingly, detailed descriptions of these devices are omitted.

Each of content receiving devices 10, 11 is connected to communication device 20, and is connected to network 50 through communication device 20. Each of content receiving devices 10, 11 communicates with respective devices, which are connected to network 50, by using the NAT function of communication device 20.

Content receiving device 15 is connected to communication device 25, and is connected to network 50 through communication device 25. Content receiving device 15 communicates with the respective devices, which are connected to network 50, by using the NAT function of communication device 25.

Display device 41 is a display terminal that displays a list of a plurality of content items, which are held by each of content receiving devices 10, 11, 15, and thumbnails of these content items, and is thereby capable of presenting a list of content items held by each of content receiving devices 10, 11, 15. As described above, display device 41 shown in FIG. 12 is different from display device 40 shown in the first exemplary embodiment in the point of acquiring the information regarding the content items from the plurality of content receiving devices. However, except for this point, display device 41 is substantially the same as display device 40 shown in the first exemplary embodiment.

That is, operations when display device 41 acquires the information regarding each of the content items from one content receiving device among the plurality of content receiving devices are substantially the same as the operations described in the first exemplary embodiment. Hence, a detailed description regarding display device 41 is omitted.

A description is made below of the operations of content receiving system 2 configured as described above.

### [2-2. Operations]

FIG. 13 is a flowchart showing an example of processing in a case of acquiring the information regarding the content item in display device 41 in the second exemplary embodiment.

The flowchart shown in FIG. 13 corresponds to the processing of display device 40 from Step S106 to Step S111, which is shown in FIG. 10 in the first exemplary embodiment.

From thumbnail request transmitter 421 (refer to FIG. 8), communication IF 460 (refer to FIG. 6) of display device 41 accepts information (hereinafter, also referred to as a "device ID") designating the content receiving device, which serves as an acquisition destination of the thumbnail (Step S201). This designation is for designating from which of content receiving devices 10, 11, 15 display device 41 receives the thumbnail.

Communication IF 460 determines whether or not communication IF 460 is P2P-connected to any of content receiving devices 10, 11, 15 (Step S202).

When it is determined in Step S202 that communication IF 460 is P2P-connected to any of content receiving devices 10, 11, 15 (Yes in Step S202), the processing proceeds to Step S203, and when it is determined in Step S202 that communication IF 460 is not P2P-connected to any of content receiving devices 10, 11, 15 (No in Step S202), the processing proceeds to Step S222.

Communication IF 460 determines whether or not the content receiving device P2P-connected thereto is the content receiving device designated in Step S201 (Step S203).

When it is determined in Step S203 that the content receiving device P2P-connected thereto is the content receiving device designated in Step S201 (Yes in Step S203), the processing proceeds to Step S204. When it is determined in Step S203 that the content receiving device P2P-connected thereto is not the content receiving device designated in Step S201 (No in Step S203), communication IF 460 disconnects the active P2P connection (Step S221). After Step S221, the processing proceeds to Step S222.

Communication IF 460 makes the P2P connection with the content receiving device designated in Step S201 (Step S222).

Communication IF 460 determines whether or not the P2P connection in Step S222 is successful (Step S223).

When it is determined in Step S223 that the P2P connection is successful (Yes in Step S223), the processing proceeds to Step S204.

When it is determined in Step S223 that the P2P connection is not successful (No in Step S223), communication IF 460 determines whether or not to retry the P2P connection (Step S224).

When it is determined in Step S224 to retry the P2P connection (Yes in Step S224), the processing returns to Step S222, and processing of Step S222 and the subsequent steps are executed.

When it is determined in Step S224 not to retry the P2P connection (No in Step S224), the processing is ended.

Thumbnail controller 420 (refer to FIG. 6, FIG. 8) determines whether or not a request has been made to acquire the thumbnail (Step S204). Note that the determination of Step S204 may be performed, for example, based on whether or not thumbnail controller 420 receives a control signal for acquiring the thumbnail.

When it is determined in Step S204 that a request has been made to acquire the thumbnail (Yes in Step S204), thumbnail controller 420 (refer to FIG. 6, FIG. 8) acquires the thumbnail from the content receiving device (for example, content receiving device 10) P2P-connected thereto (Step S205). When it is determined in Step S204 that a request has not been made to acquire the thumbnail (No in Step S204), the processing proceeds to Step S206.

In Step S205, during the P2P connection performed once, thumbnail controller 420 acquires all of thumbnails, which should be acquired, from content receiving device P2P-connected thereto. That is, the content receiving device, to which display device 41 is P2P-connected, generates the thumbnails of one or a plurality of content items requested from thumbnail controller 420, and transmits the generated thumbnails to display device 41.

After acquiring all of the thumbnails, which should be acquired, from the content receiving device (for example, content receiving device 10) P2P-connected to communication IF 460, thumbnail controller 420 sequentially acquires the thumbnails from other content receiving devices (for example, content receiving devices 11, 15). Moreover, display 450 (refer to FIG. 6) displays the acquired thumbnails on display 450.

Content controller 430 (refer to FIG. 6, FIG. 9) determines whether or not a request has been made to acquire the content item (Step S206). Note that the determination of Step S206 may be performed, for example, based on whether or not content controller 430 receives a control signal for acquiring the content item.

When it is determined in Step S206 that a request has been made to acquire the content item (Yes in Step S206), content controller 430 acquires the content item (content item designated by the user) from the content receiving device (for example, content receiving device 10) P2P-connected to communication IF 460, and content reproducer 433 (refer to FIG. 9) reproduces the acquired content item and displays the content item on display 450 (Step S207). When it is determined in Step S206 that a request has not been made to acquire the content item (No in Step S206), the processing proceeds to Step S208.

Communication IF 460 determines whether or not to end the P2P connection (Step S208). In Step S208, in a case where the thumbnails are acquired with regard to all of the content items included in the list acquired by list controller 410, communication IF 460 determines to end the P2P connection, and if the content item for which the thumbnail is not acquired is present in the content items included in the list acquired by list controller 410, communication IF 460 determines not to end the P2P connection.

In Step S208, when communication IF 460 determines to end the P2P connection (Yes in Step S208), communication IF 460 disconnects the P2P connection (Step S209). In this way, a series of the processing shown in the flowchart of FIG. 13 is ended.

In Step S208, when communication IF 460 determines not to end the P2P connection (No in Step S208), the processing returns to Step S201. Then, display device 41 continues the processing in order to acquire the unacquired thumbnail.

Note that display device 41 may be individually P2P-connected to the plurality of content receiving devices at the same time. That is, display device 41 may operate so as not to execute the processing of Step S221 and not to disconnect the P2P connection. In this case, display device 41 can be individually P2P-connected to the plurality of content receiving devices at the same time, and can sequentially communicate with the content receiving devices with which display device 41 needs to communicate.

Moreover, in this case, display device 41 may sequentially acquire the thumbnails for each of the content receiving devices, or may simultaneously acquire the thumbnails from the plurality of content receiving devices in parallel.

### [2-3. Effects]

In the content receiving system in this exemplary embodiment configured as described above, after generating the thumbnails of the acquired content items, the plurality of content receiving devices connected to the system directly transmit the generated thumbnails to the display device without passing through the server.

In a case where it is assumed that the server holds such thumbnails, and the thumbnails are supplied from the server to the display device, the server must include a storage device provided with a storage capacity necessary for retaining the thumbnails. Moreover, a communication line is required, which is provided with a channel capacity that enables the thumbnails to be transmitted from the content receiving device to the server, and enables the thumbnails to be transmitted from the server to the display device. Then, as the number of such content receiving devices connected to the server is increased, the storage capacity of the storage device, which is necessary for retaining the thumbnails, is increased, and moreover, the channel capacity of the communication line, which is necessary for transmitting and receiving the thumbnails, is increased.

In the content receiving system of which example is illustrated in this exemplary embodiment, the server does not have to retain the thumbnails in the series of processing in which the display device acquires the thumbnails from the plurality of content receiving devices. Hence, the server does not have to include a storage device with a large storage capacity for retaining the thumbnails. Moreover, for the communication line that connects the server thereto, a communication line with a large channel capacity necessary for transmitting and receiving the thumbnails does not have to be used. Hence, in the content receiving system shown in this exemplary embodiment, the increase in the storage capacity of the storage device provided in the server can be suppressed, and moreover, the increase in the channel capacity of the communication line that connects the server thereto can be suppressed.

### MODIFICATION EXAMPLE OF EXEMPLARY EMBODIMENTS

Here, a description is made of essential constituent elements of the content receiving systems described in the first and second exemplary embodiments.

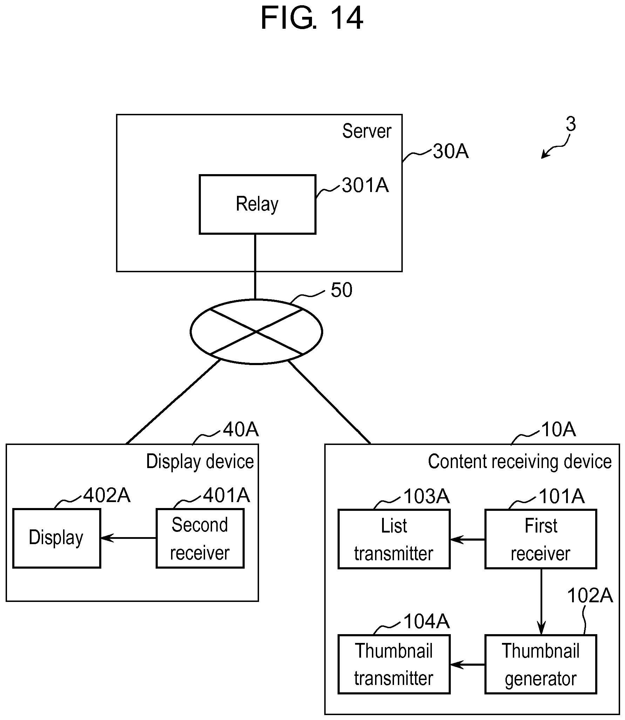

FIG. 14 is a diagram schematically showing an example of a system configuration of content receiving system 3 in a modification example of the exemplary embodiments.

As shown in FIG. 14, content receiving system 3 includes: content receiving device 10A; server 30A; and display device 40A for displaying content items acquired by content receiving device 10A. Server 30 includes relay 301A that relays information. Content receiving device 10A includes: first receiver 101A that receives content items; list transmitter 103A; thumbnail generator 102A that generates thumbnails of the content items received by first receiver 101A; and thumbnail transmitter 104A that transmits the thumbnails generated by thumbnail generator 102A, to display device 40A. List transmitter 103A transmits a list, which includes information indicating the content items received by first receiver 101A, to display device 40A through a relay made by relay 301A. Display device 40A includes: second receiver 401A; and display 402A. Second receiver 401A receives the list transmitted by list transmitter 103A, and the thumbnails transmitted by thumbnail transmitter 104A. Display 402A displays an image in which the thumbnail of the content item among the thumbnails received by second receiver 401A is associated with information included in the list received by second receiver 401A, the thumbnail of the content item corresponding to the information.

In this way, after generating the thumbnail of the acquired content item, the content receiving device can transmit the generated thumbnail to the display device directly without passing through the server.

In a case where it is assumed that the server holds such thumbnails, and the thumbnails are supplied from the server to the display device, the server must include a storage device provided with a storage capacity necessary for retaining the thumbnails. Moreover, a communication line is required, which is provided with a channel capacity that enables the thumbnails to be transmitted from the content receiving device to the server, and enables the thumbnails to be transmitted from the server to the display device. Then, as the number of such content receiving devices connected to the server is increased, the storage capacity of the storage device, which is necessary for retaining the thumbnails, is increased, and moreover, the channel capacity of the communication line, which is necessary for transmitting and receiving the thumbnails, is increased.

In the content receiving system of which example is illustrated in this exemplary embodiment, the server does not have to retain the thumbnails in the series of processing in which the display device acquires the thumbnails from the content receiving device. Hence, the server does not have to include a storage device with a large storage capacity for retaining the thumbnails. Moreover, for the communication line that connects the server thereto, a communication line with a large channel capacity necessary for transmitting and receiving the thumbnails does not have to be used. Hence, in the content receiving system shown in this exemplary embodiment, the increase in the storage capacity of the storage device provided in the server can be suppressed, and moreover, the increase in the channel capacity of the communication line that connects the server thereto can be suppressed.

### CONCLUSION

As described above, the content receiving system in the exemplary embodiment of the present disclosure includes: the content receiving device; the server; and the display device. The content receiving device includes: the first receiver that receives a content item; the list transmitter; the thumbnail generator; and the thumbnail transmitter. The list transmitter transmits the list, which includes the information indicating the content item received by the first receiver, to the display device through the server. The thumbnail generator generates a thumbnail of the content item received by the first receiver. The thumbnail transmitter transmits the thumbnail generated by the thumbnail generator, to the display device. The display device includes: the second receiver; and the display. The second receiver receives the list transmitted by the list transmitter, and the thumbnail transmitted by the thumbnail transmitter. The display displays an image in which a thumbnail of a content item among a plurality of the thumbnails received by the second receiver is associated with the information included in the list received by the second receiver, the thumbnail of the content item corresponding to the information.

Note that each of content receiving systems 1, 2, 3 is an example of the content receiving system. Each of content receiving devices 10, 11, 15, 10A is an example of the content receiving device. Each of servers 30, 30A is an example of the server. Each of display devices 40, 41, 40A is an example of the display device. Each of content receiver 110 and first receiver 101A is an example of the first receiver. Each of list transmitters 133, 103A is an example of the list transmitter. Each of thumbnail generators 142, 102A is an example of the thumbnail generator. Each of thumbnail transmitters 143, 104A is an example of the thumbnail transmitter. Each of list acquisition unit 412 and second receiver 401A is an example of the second receiver. Each of displays 450, 402A is an example of the display. Image 1101 is an example of the image displayed on the display.

In this content receiving system, after generating the thumbnail of the acquired content item, the content receiving device directly transmits the generated thumbnail to the display device without passing through the server.

In a case where it is assumed that the server holds such thumbnails, and the thumbnails are supplied from the server to the display device, the server must include a storage device provided with a storage capacity necessary for retaining the thumbnails. Moreover, a communication line is required, which is provided with a channel capacity that enables the thumbnails to be transmitted from the content receiving device to the server, and enables the thumbnails to be transmitted from the server to the display device. Then, as the number of such content receiving devices connected to the server is increased, the storage capacity of the storage device, which is necessary for retaining the thumbnails, is increased, and moreover, the channel capacity of the communication line, which is necessary for transmitting and receiving the thumbnails, is increased.

In this content receiving system, the server does not have to retain the thumbnails in the series of processing in which the display device acquires the thumbnails from the content receiving device. Hence, the server does not have to include a storage device with a large storage capacity for retaining the thumbnails. Moreover, for the communication line that connects the server thereto, a communication line with a large channel capacity necessary for transmitting and receiving the thumbnails does not have to be used. Hence, in this content receiving system, the increase in the storage capacity of the storage device provided in the server can be suppressed, and moreover, the increase in the channel capacity of the communication line that connects the server thereto can be suppressed.

In this content receiving system, the thumbnail generator may generate the thumbnail based on the request from the display device, and the thumbnail transmitter may transmit the thumbnail to the display device based on this request.

In this configuration, the content receiving device operates so as to generate the thumbnail and transmit the thumbnail to the display device in the case of receiving the request from the display device. Hence, in a case of not receiving the request from the display device, the content receiving device does not generate the thumbnail, and accordingly, the amount of the processing that should be executed in the content receiving device can be reduced.

Moreover, in this content receiving system, the content receiving device may include the content transmitter that, at the time of receiving the information for identifying a content item selected by the user among the content items included in the list from the display device, encodes the selected content item into a format displayable by the display, and transmits the already encoded content item to the display device.

Note that content transmitter 153 is an example of the content transmitter.

In this configuration, the content receiving device operates so as to transmit the content item, which is selected by the user based on the thumbnail displayed on the display device, to the display device. In this case, the content item is encoded appropriately based on the request from the display device, and accordingly, the display device can display the content item appropriately.

Moreover, in this content receiving system, the content receiving system may include the plurality of content receiving devices. The display device may include an acquisition request transmitter that transmits the acquisition requests for the thumbnail individually to the plurality of content receiving devices. For each of the content receiving devices, the second receiver may sequentially receive the thumbnails transmitted by the thumbnail transmitters of the content receiving devices.

Note that thumbnail request transmitter 421 is an example of the acquisition request transmitter.

In this configuration, the display device can display the list including the content items held by the plurality of content receiving devices. Then, if the user browses the list displayed on the display device and selects the content item, the content item is transmitted to the display device from the content receiving device that holds the content item selected by the user, and the content item is reproduced on the display device. In this way, the user can view the content item, which is selected on the display device, on the display device.

Moreover, in this content receiving system, the thumbnail generator may extract a part of a plurality of image frames included in the content item, and may generate a thumbnail with a moving image file format by using the extracted image frame.

In this configuration, the content receiving device can generate a thumbnail with the moving image file format, and can transmit the generated thumbnail to the display device. In this way, by this thumbnail, the user can more easily know the details of the content item indicated by the thumbnail compared to a thumbnail of a still image.

Moreover, in this content receiving system, the content receiving device may include a tuner for receiving a broadcast wave. The first receiver may receive the broadcast wave by the tuner, and may receive a broadcast content item included in the received broadcast wave, as a content item.

Note that the tuner (not shown) provided in content receiver 110 is an example of the tuner.

In this configuration, the content receiving device can acquire the content item from the broadcast station, and can generate the thumbnail. By the generated thumbnail, the user can know what content item is acquired from the broadcast wave by the content receiving device. Then, the user can view the content item on the display device.

Moreover, in this content receiving system, the content receiving device may include a storage. The first receiver may retain the broadcast content item, which is included in the received broadcast wave, in the storage, and may acquire the broadcast content item retained in the storage, as a content item.

Note that storage 120 is an example of the storage.

In this configuration, the content receiving device can read out and acquire the content item, which is acquired from the broadcast wave and retained in the storage, from the storage, and can generate the thumbnail of the content item. By the generated thumbnail, the user can know what content item is retained in the storage of the content receiving device. Then, the user can view the content item on the display device.

Moreover, in this content receiving system, the display device and the content receiving device may make a P2P (Peer to Peer)-type communication connection, and the thumbnail transmitter may transmit the thumbnail to the display device by using the P2P-type communication connection.

In this configuration, the display device can acquire the thumbnail from the content receiving device by the P2P communication. That is, the display device can acquire the thumbnail from the content receiving device without relaying other communication device.

Moreover, in this content receiving system, the thumbnail generator may include a thumbnail storage that stores the thumbnails generated by the thumbnail generator. Before generating the thumbnail of the content item received by the first receiver, the thumbnail generator may determine whether or not the thumbnail is stored in the thumbnail storage, and if the thumbnail is stored in the thumbnail storage, the thumbnail generator may read out the thumbnail from the thumbnail storage without generating the thumbnail, and use the thumbnail read out from the thumbnail storage.

Note that thumbnail storage 142A is an example of the thumbnail storage.

In this configuration, if the thumbnail generated in the past is stored in the thumbnail storage, the content receiving device can perform processing for reading out the thumbnail stored in the thumbnail storage in place of the processing for generating the thumbnail. Hence, with regard to the thumbnail stored in the thumbnail storage, it is not necessary for the content receiving device to generate this thumbnail, and accordingly, the amount of the processing that should be executed in the content receiving device can be reduced.

Moreover, the content receiving device in the exemplary embodiment of the present disclosure includes: a first receiver that receives a content item; a list transmitter; a thumbnail generator; and a thumbnail transmitter. The list transmitter transmits a list, which includes the information indicating the content item received by the first receiver, to the display device through the server. The thumbnail generator generates a thumbnail of the content item received by the first receiver. The thumbnail transmitter transmits the thumbnail generated by the thumbnail generator, to the display device.

In a content receiving system including this content receiving device, similar effects to those of the above-described content receiving system can be obtained.

Moreover, the display device in the exemplary embodiment of the present disclosure includes: a second receiver; and a display. The second receiver receives the list and the thumbnails, which are transmitted from the content receiving device. The display displays an image in which a thumbnail of a content item among the thumbnails received by the second receiver is associated with the information included in the list received by the second receiver, the thumbnail of the content item corresponding to the information.

In a content receiving system including this display device, similar effects to those of the above-described content receiving system can be obtained.

Moreover, a control method of the content receiving system in the exemplary embodiment of the present disclosure is a control method of a content receiving system including a content receiving device, a server, and a display device. This control method includes: a first reception step of causing the content receiving device to receive a content item; a list transmission step of causing the content receiving device to transmit a list, which includes information indicating the content item received in the first reception step, through the server to the display device; a thumbnail generation step of causing the content receiving device to generate a thumbnail of the content item received in the first reception step; a thumbnail transmission step of causing the content receiving device to transmit the thumbnail generated in the thumbnail generation step, to the display device; a second reception step of causing the display device to receive the list transmitted in the list transmission step and the thumbnail transmitted in the thumbnail transmission step; and a display step of causing the display device to display, on a display, an image in which a thumbnail of a content item among a plurality of the thumbnails received in the second reception step is associated with the information included in the list received in the second reception step, the thumbnail of the content item corresponding to the information.

A content receiving system that operates by this control method can obtain similar effects to those of the above-described content receiving system.

Moreover, a program in the exemplary embodiment of the present disclosure is a program for causing a computer to execute the above-described control method.

As described above, the description is made of the first and second exemplary embodiments and the modification example as illustration of the technique disclosed in the present application. For this purpose, the accompanying drawings and the detailed description are provided. However, the technique in the present disclosure is not limited thereto, and is also applicable to exemplary embodiments subjected to alteration, replacement, addition, omission and the like. Moreover, it is also possible to form new exemplary embodiments by combining the respective constituent elements described in the foregoing exemplary embodiments.

The constituent elements described in the accompanying drawings and the detailed description can include not only constituent elements, which are essential for solving the problem, but also constituent elements, which are provided for exemplifying the above-described technique, and are not essential for solving the problem. Therefore, it should not be immediately recognized that such non-essential constituent elements are essential based on the fact that the non-essential constituent elements are described in the accompanying drawings and the detailed description.

Moreover, the above-mentioned exemplary embodiments are those for exemplifying the technique in this disclosure, and accordingly, can be subjected to varieties of alterations, replacements, additions, omissions and the like within the scope of claims.

### INDUSTRIAL APPLICABILITY

The present disclosure is applicable to a content receiving system that presents a thumbnail of a content item to a display device. Specifically, the present disclosure is applicable to a recording device that stores the content item in a variety of recording mediums, a television set, a smart phone, a cellular phone, a tablet terminal, a personal computer, a server computer, and the like.

### REFERENCE MARKS IN THE DRAWINGS

1, 2, 3: content receiving system
10, 10A, 11, 15: content receiving device
20, 25: communication device
30, 30A: server
40, 40A, 41: display device
50: network
101A: first receiver
102A, 142: thumbnail generator
103A, 133: list transmitter
104A, 143: thumbnail transmitter
110: content receiver
120: storage
130, 410: list controller
131: list request receiver
132: list generator
140, 420: thumbnail controller
141: thumbnail request receiver
142A, 425: thumbnail storage
150, 430: content controller
151: content request receiver
152: content converter
153: content transmitter
160, 460: communication IF
301A: relay
401A: second receiver
402A, 450: display
411: list request transmitter
412: list acquisition unit
413: list display controller
421: thumbnail request transmitter
422: thumbnail receiver
423: thumbnail display instruction unit
431: content request transmitter
432: content acquisition unit
433: content reproducer
440: setting unit
1101: image
1102, 1103: portion

## Claims

1. A content receiving system comprising:
- a plurality of content receiving devices (10, 11, 15);
- a server (30); and
- a display device (41),
each connected to a communication network (50);
wherein each content receiving device (10, 11, 15) includes :
a content receiver (110) that receives a content item ;
a list transmitter (133) that transmits a list, which includes information indicating the content item received by the content receiver (110), to the server (30);
a thumbnail generator (142) that generates a thumbnail of the content item received by the content receiver (110); and
a thumbnail transmitter (143) that transmits the thumbnail generated by the thumbnail generator (142), to the display device (40),
the display device (41) includes:
a list controller (410) that requests and acquires a list of a plurality of content items, which are held by each of said content receiving devices (10, 11, 15), from said server (30) ;
a communication interface (460) that establishes a P2P-type communication connection between the display device (40) and a designated content receiving device (10);
a thumbnail controller (420) that requests and receives a thumbnail of a content item of said list of a plurality of content items to the designated content receiving device (10) by using the P2P-type communication connection between the display device (41) and the designated content receiving device (10) ;
a display (450), and
wherein
the display (450) displays both the information indicating said content item and the corresponding thumbnail transmitted from the designated content receiving device (10) to the display device (41), visually associated with each other.

2. The content receiving system according to claim 1, wherein
the thumbnail generator (142) generates the thumbnail of the content item received by the content receiver (110), based on a request from the display device (41), and
the thumbnail transmitter (143) transmits the thumbnail to the display device (41) based on the request.

3. The content receiving system according to claim 1, wherein
the designated content receiving device (10) includes a content transmitter (153) that, upon receiving, from the display device (41), information for identifying a content item selected by a user among content items included in the list, encodes the selected content item into a format displayable by the display, and transmits the selected content item, which has been encoded, to the display device (41).

4. The content receiving system according to claim 1, wherein
the display device (41) includes
an acquisition request transmitter that transmits acquisition requests for the thumbnail individually to the plurality of content receiving devices (10, 11, 15), and
a thumbnail receiver (422) that sequentially receives the thumbnails transmitted by the thumbnail transmitters of the content receiving devices for each of the content receiving devices.

5. The content receiving system according to claim 1, wherein
the thumbnail generator (141) includes a thumbnail storage (142A) that stores the thumbnails generated by the thumbnail generator, and
before generating a thumbnail of the content item received by the content receiver (110), the thumbnail generator (141) determines whether or not the thumbnail is stored in the thumbnail storage (142A), and when the thumbnail is stored in the thumbnail storage (142A), the thumbnail generator (141) does not generate the thumbnail, and reads out the thumbnail from the thumbnail storage (142A) and uses the thumbnail.

6. A control method of a content receiving system including a plurality of content receiving devices (10, 11, 15), a server (30), and a display device (40), each connected to a communication network (50), the control method comprising:
- at each of said content receiving devices (10, 11, 15), a first reception step of causing the content receiving device (10, 11, 15) to receive a content item and a list transmission step (S103) of causing the content receiving device to transmit a list, which includes information indicating the content item received in the first reception step, to the server (30) ;
- at the server (30), a step of transmitting a list of a plurality of content items, which are held by each of said content receiving devices (10, 11, 15), to the display device (41);
- at said display device (40), a step of requesting and acquiring the list of a plurality of content items from said server ;
- at said display device (40), a P2P-type communication connection establishment step (S222) of making a P2P-type communication connection between the display device (40) and a designated content receiving device (10) ;
- at said display device (40), a thumbnail request step of requesting a thumbnail of a content item of said list of a plurality of content items to the designated content receiving device (10) by using the P2P-type communication connection ;
- at said designated content receiving device (10), a thumbnail generation step (S109) of causing the designated content receiving device (10) to generate a thumbnail of said content item;
- at said designated content receiving device (10), a thumbnail transmission step (S110, S205) of causing the designated content receiving device (10) to transmit the thumbnail generated in the thumbnail generation step (S109), to the display device (40), by using the P2P-type communication connection ; and
- at said display device (40), a display step (S111) of causing the display device (40) to display, on a display (450), both the information indicating said content item and the corresponding thumbnail transmitted in the thumbnail transmission step (S110, S205), visually associated with each other.

## Patentansprüche

1. Inhaltsempfangssystem, das Folgendes umfasst:
- eine Vielzahl von Inhaltsempfangsvorrichtungen (10, 11, 15) ;
- einen Server (30) und
- eine Anzeigevorrichtung (41),
die jeweils mit einem Kommunikationsnetzwerk (50) verbunden sind;
wobei jede Inhaltsempfangsvorrichtung (10, 11, 15) Folgendes beinhaltet:
einen Inhaltsempfänger (110), der ein Inhaltselement empfängt;
einen Listensender (133), der eine Liste, die Informationen beinhaltet, die das vom Inhaltsempfänger (110) empfangene Inhaltselement angeben, zum Server (30) überträgt;
einen Miniaturansichterzeuger (142), der eine Miniaturansicht des vom Inhaltsempfänger (110) empfangenen Inhaltselements erzeugt; und
einen Miniaturansichtssender (143), der die vom Miniaturansichterzeuger (142) erzeugte Miniaturansicht zur Anzeigevorrichtung (40) überträgt,
die Anzeigevorrichtung (41) beinhaltet Folgendes:
eine Listensteuerung (410), die eine Liste von einer Vielzahl von Inhaltselementen, die in jeder der Inhaltsempfangsvorrichtungen (10, 11, 15) enthalten sind, vom Server (30) anfordert und erfasst;
eine Kommunikationsschnittstelle (460), die eine Kommunikationsverbindung des P2P-Typs zwischen der Anzeigevorrichtung (40) und einer genannten Inhaltsempfangsvorrichtung (10) herstellt;
eine Miniaturansichtssteuerung (420), die unter Verwendung der Kommunikationsverbindung des P2P-Typs zwischen der Anzeigevorrichtung (41) und der genannten Inhaltsempfangsvorrichtung (10) eine Miniaturansicht eines Inhaltselements der Liste einer Vielzahl von Inhaltselementen bei der angegebenen Inhaltsempfangsvorrichtung (10) anfordert und empfängt;
eine Anzeige (450) und
wobei
die Anzeige (450) sowohl die Informationen, die das Inhaltselement angeben, als auch die entsprechende Miniaturansicht, die von der genannten Inhaltsempfangsvorrichtung (10) zur Anzeigevorrichtung (41) übertragen wurde, visuell miteinander verknüpft anzeigt.

2. Inhaltsempfangssystem nach Anspruch 1, wobei
der Miniaturansichterzeuger (142) die Miniaturansicht des vom Inhaltsempfänger (110) empfangenen Inhaltselements auf Basis einer Anforderung von der Anzeigevorrichtung (41) erzeugt und
der Miniaturansichtssender (143) die Miniaturansicht auf Basis der Anforderungen zur Anzeigevorrichtung (41) überträgt.

3. Inhaltsempfangssystem nach Anspruch 1, wobei
die genannte Inhaltsempfangsvorrichtung (10) einen Inhaltssender (153) beinhaltet, der, nachdem er von der Anzeigevorrichtung (41) Informationen zum Identifizieren eines Inhaltselements empfangen hat, das von einem Benutzer aus Inhaltselementen ausgewählt wurde, die in der Liste beinhaltet sind, das ausgewählte Inhaltselement in ein Format codiert, das von der Anzeige anzeigbar ist, und das ausgewählte Inhaltselement, das codiert wurde, zur Anzeigevorrichtung (41) überträgt.

4. Inhaltsempfangssystem nach Anspruch 1, wobei
die Anzeigevorrichtung (41) Folgendes beinhaltet
einen Erfassungsanforderungssender, der Erfassungsanforderungen für die Miniaturansicht einzeln zur Vielzahl von Inhaltsempfangsvorrichtungen (10, 11, 15) überträgt, und
einen Miniaturansichtsempfänger (422), der die Miniaturansichten, die von den Miniaturansichtssendern der Inhaltsempfangsvorrichtungen übertragen werden, für jede der Inhaltsempfangsvorrichtungen sequenziell empfängt.

5. Inhaltsempfangssystem nach Anspruch 1, wobei
der Miniaturansichterzeuger (141) einen Miniaturansichtsspeicher (142A) beinhaltet, der die vom Miniaturansichterzeuger erzeugte Miniaturansichten speichert, und
der Miniaturansichterzeuger (141), bevor er eine Miniaturansicht des Inhaltselements, das vom Inhaltsempfänger (110) empfangen wurde, erzeugt, bestimmt, ob die Miniaturansicht im Miniaturansichtsspeicher (142A) gespeichert ist oder nicht, und wenn die Miniaturansicht im Miniaturansichtsspeicher (142A) gespeichert ist, der Miniaturansichterzeuger (141) die Miniaturansicht nicht erzeugt und die Miniaturansicht aus dem Miniaturansichtsspeicher (142A) ausliest und die Miniaturansicht verwendet.

6. Steuerverfahren eines Inhaltsempfangssystems, das eine Vielzahl von Inhaltsempfangsvorrichtungen (10, 11, 15), einen Server (30) und eine Anzeigevorrichtung (40), die jeweils mit einem Kommunikationsnetzwerk (50) verbunden sind, beinhaltet, wobei das Steuerverfahren Folgendes umfasst:
- an jeder der Inhaltsempfangsvorrichtungen (10, 11, 15) einen ersten Empfangsschritt zum Bewirken, dass die Inhaltsempfangsvorrichtung (10, 11, 15) ein Inhaltselement empfängt, und einen Listenübertragungsschritt (S103) zum Bewirken, dass die Inhaltsempfangsvorrichtung eine Liste, die Informationen beinhaltet, die das Inhaltselement angeben, das im ersten Empfangsschritt empfangen wurde, zum Server (30) überträgt;
- am Server (30) einen Schritt zum Übertragen einer Liste einer Vielzahl von Inhaltselementen, die in jeder der Inhaltsempfangsvorrichtungen (10, 11, 15) enthalten sind, zur Anzeigevorrichtung (41);
- an der Anzeigevorrichtung (40) einen Schritt zum Anfordern und Erfassen der Liste einer Vielzahl von Inhaltselementen vom Server;
- an der Anzeigevorrichtung (40) einen Herstellungsschritt (S222) für eine Kommunikationsverbindung des P2P-Typs zum Aufbauen einer Kommunikationsverbindung des P2P-Typs zwischen der Anzeigevorrichtung (40) und einer genannten Inhaltsempfangsvorrichtung (10);
- an der Anzeigevorrichtung (40) einen Miniaturansichtanforderungsschritt zum Anfordern einer Miniaturansicht eines Inhaltselements der Liste einer Vielzahl von Inhaltselementen bei der angegebenen Inhaltsempfangsvorrichtung (10) unter Verwendung der Kommunikationsverbindung des P2P-Typs;
- an der genannten Inhaltsempfangsvorrichtung (10) einen Miniaturansichterzeugungsschritt (S109) zum Bewirken, dass die genannte Inhaltsempfangsvorrichtung (10) eine Miniaturansicht des Inhaltselements erzeugt;
- an der genannten Inhaltsempfangsvorrichtung (10) einen Miniaturansichtübertragungsschritt (S110, S205) zum Bewirken, dass die genannte Inhaltsempfangsvorrichtung (10) die im Miniaturansichterzeugungsschritt (S109) erzeugte Miniaturansicht unter Verwendung der Kommunikationsverbindung des P2P-Typs zur Anzeigevorrichtung (40) überträgt; und
- an der Anzeigevorrichtung (40) einen Anzeigeschritt (S111) zum Bewirken, dass die Anzeigevorrichtung (40) auf einer Anzeige (450) sowohl die Informationen, die das Inhaltselement angeben, als auch die entsprechende Miniaturansicht, die im Miniaturansichtübertragungsschritt (S110, S205) übertragen wurde, visuell miteinander verknüpft anzeigt.

## Revendications

1. Système de réception de contenu, comprenant :
- une pluralité de dispositifs de réception de contenu (10, 11, 15) ;
- un serveur (30) ; et
- un dispositif d'affichage (41),
connectés chacun à un réseau de communication (50) ;
dans lequel chaque dispositif de réception de contenu (10, 11, 15) comporte :
un récepteur de contenu (110) qui reçoit un élément de contenu ;
un émetteur de liste (133) qui transmet une liste qui comporte des informations indiquant l'élément de contenu reçu par le récepteur de contenu (110), au serveur (30) ;
un générateur d'imagettes (142) qui produit une imagette de l'élément de contenu reçu par le récepteur de contenu (110) ; et
un émetteur d'imagettes (143) qui transmet l'imagette produite par le générateur d'imagettes (142), au dispositif d'affichage (40),
le dispositif d'affichage (41) comporte :
un contrôleur de liste (410) qui demande et acquiert une liste d'une pluralité d'éléments de contenu qui sont détenus par chacun desdits dispositifs de réception de contenu (10, 11, 15), auprès dudit serveur (30) ;
une interface de communication (460) qui établit une connexion de communication de type pair à pair entre le dispositif d'affichage (40) et un dispositif désigné de réception de contenu (10) ;
un contrôleur d'imagette (420) qui demande et reçoit une imagette d'un élément de contenu de ladite liste d'une pluralité d'éléments de contenu, dans le dispositif désigné de réception de contenu (10) à l'aide de la connexion de communication de type pair à pair entre le dispositif d'affichage (41) et le dispositif désigné de réception de contenu (10) ;
un écran (450), et
dans lequel,
l'écran (450) affiche à la fois les informations indiquant ledit élément de contenu et l'imagette correspondante, transmise du dispositif désigné de réception de contenu (10) au dispositif d'affichage (41), visuellement associées entre elles.

2. Système de réception de contenu, selon la revendication 1, dans lequel :
le générateur d'imagettes (142) produit l'imagette de l'élément de contenu reçu par le récepteur de contenu (110), sur la base d'une demande provenant du dispositif d'affichage (41), et
l'émetteur d'imagettes (143) transmet l'imagette au dispositif d'affichage (41) sur la base de la demande.

3. Système de réception de contenu, selon la revendication 1, dans lequel :
le dispositif désigné de réception de contenu (10) comporte un émetteur de contenu (153) qui, à la réception, en provenance du dispositif d'affichage (41), d'informations destinées à identifier un élément de contenu choisi par un utilisateur parmi les éléments de contenu figurant dans la liste, code l'élément de contenu choisi, dans un format affichable par l'écran, et transmet l'élément de contenu choisi qui a été codé, au dispositif d'affichage (41).

4. Système de réception de contenu selon la revendication 1, dans lequel :
le dispositif d'affichage (41) comporte :
un émetteur de demandes d'acquisition qui transmet des demandes d'acquisition de l'imagette individuellement à la pluralité de dispositifs de réception de contenu (10, 11, 15), et
un récepteur d'imagettes (422) qui reçoit séquentiellement les imagettes transmises par les émetteurs d'imagettes des dispositifs de réception de contenu pour chacun des dispositifs de réception de contenu.

5. Système de réception de contenu selon la revendication 1, dans lequel :
le générateur d'imagettes (141) comporte une mémoire d'imagettes (142A) qui stocke les imagettes produites par le générateur d'imagettes, et
avant de produire une imagette de l'élément de contenu reçu par le récepteur de contenu (110), le générateur d'imagettes (141) détermine si l'imagette est stockée ou non dans la mémoire d'imagettes (142A), et lorsque l'imagette est stockée dans la mémoire d'imagettes (142A), le générateur d'imagettes (141) ne produit pas l'imagette et lit l'imagette dans la mémoire d'imagettes (142A) et utilise l'imagette.

6. Procédé de commande d'un système de réception de contenu comportant une pluralité de dispositifs de réception de contenu (10, 11, 15), un serveur (30) et un dispositif d'affichage (40), connectés chacun à un réseau de communication (50), le procédé de commande comprenant les étapes suivantes :
- au niveau de chacun desdits dispositifs de réception de contenu (10, 11, 15), une première étape de réception consistant à faire que le dispositif de réception de contenu (10, 11, 15) reçoive un élément de contenu et une étape de transmission de liste (S103) consistant à faire que le dispositif de réception de contenu transmette une liste qui comporte des informations indiquant l'élément de contenu reçu à la première étape de réception, au serveur (30) ;
- au niveau de serveur (30), une étape consistant à transmettre une liste d'une pluralité d'éléments de contenu qui sont détenus par chacun desdits dispositifs de réception de contenu (10, 11, 15), au dispositif d'affichage (41) ;
- au niveau dudit dispositif d'affichage (40), une étape consistant à demander et à acquérir la liste d'une pluralité d'éléments de contenu auprès dudit serveur ;
- au niveau dudit dispositif d'affichage (40), une étape d'établissement de connexion de communication de type pair à pair (S222) consistant à établir une connexion de communication de type pair à pair entre le dispositif d'affichage (40) et un dispositif désigné de réception de contenu (10) ;
- au niveau dudit dispositif d'affichage (40), une étape de demande d'imagette consistant à demander une imagette d'élément de contenu de ladite liste d'une pluralité d'éléments de contenu au dispositif désigné de réception de contenu (10) au moyen de la connexion de communication de type pair à pair ;
- au niveau dudit dispositif désigné de réception de contenu (10), une étape de génération d'imagette (S109) consistant à faire produire au dispositif désigné de réception de contenu (10) une imagette dudit élément de contenu ;
- au niveau dudit dispositif désigné de réception de contenu (10), une étape de transmission d'imagette (S110, S205) consistant à faire que le dispositif désigné de réception de contenu (10) transmette l'imagette produite à l'étape de génération d'imagette (S109), au dispositif d'affichage (40), au moyen de la connexion de communication de type pair à pair ; et
- au niveau dudit dispositif d'affichage (40), une étape d'affichage (S111) consistant à faire afficher au dispositif d'affichage (40), sur un écran (450), à la fois les informations indiquant ledit élément de contenu et l'imagette correspondante transmise à l'étape de transmission d'imagette (S110, S205), visuellement associées entre elles.
